# EUROPEAN PATENT APPLICATION

(11) **EP 1 574 375 A1**
(43) Date of publication of application: **14.09.2005**
(21) Application number: 04101012.5
(22) Date of filing: 12.03.2004
(51) Int. Cl.: B60J 7/02

(54) **Constructional element**

(71) Applicant: Inalfa Roof Systems Group B.V., 5804 AH Venray (NL)
(72) Inventor: Manders, Peter Christiaan Leonardus Johannes, 5961 SM Horst (NL)
(74) Representative: Voncken, Bartholomeus Maria Ch.

(57) **Abstract**

There is provided a constructional element (5) which during its use will be subjected to variable mechanical loads. The constructional element (5) is, for its larger part, manufactured from a material comprising a base material compounded with a high performance thermoplastic rubber, which preferably has the following properties, as measured according to ISO 37:
- a Shore A hardness of 40 - 90;
- a 100% Modulus of 0.5 - 3 Mpa;
- a 300% Modulus of 0.8 - 5 Mpa;
- a tensile strength of 6 - 13 Mpa;
- an elongation of 650 - 1100%.

## Description

The invention relates to a constructional element which during its use will be subjected to variable mechanical loads.

Many constructional elements known nowadays suffer from variable mechanical loads, such that an effect known as Noise Vibration Harshness is experienced during the lifetime of the product. Such an effect may be caused by an excitation of the constructional element under specific conditions. One example of such a constructional element can be found as a slide shoe in a sliding panel of an open roof construction for a vehicle. Such a sliding panel, for example a sunroof, and its components may be excited when the vehicle is driving on a bumpy road. Due to a lack of internal dampening properties between the mechanical components of such an open roof construction, specifically between such a slide shoe and a guide in which the slide shoe is housed, resonant vibrations are allowed to occur.

Current solutions for this problem are, among others, adding felt to the constructional element or adding springs or rubber bumpers between adjoining constructional elements, in order to isolate and minimise resonant vibrations. Also known are solutions, in which a wear resistant sliding material is covering a rubber insert (DE-C-2 553 549). Such known constructional elements, among others, may be manufactured using a two component injection process or using push-on end caps.

It is an object of the present invention to provide an improved constructional element of the type referred to above.

Thus, in accordance with the present invention a constructional element is provided which during its use will be subjected to variable mechanical loads and which is characterised in that the constructional element for its
characterised in that the constructional element for its larger part is manufactured from a material comprising a base material compounded with a high performance thermoplastic rubber.

The compound of a base material and a high performance thermoplastic rubber effectively eliminates the detrimental effects of resonant vibrations. Vibration propagation is reduced or even eliminated with consequent noise reduction. Further, no additional constructional features have to be added to said constructional element in accordance with the present invention, thus reducing the cost.

In accordance with a preferred embodiment the high performance thermoplastic rubber has the following properties, as measured according to ISO 37:
- a Shore A hardness of 40 - 90;
- a 100 % Modulus of 0.5 - 3 Mpa;
- a 300 % Modulus of 0.8 - 5 Mpa;
- a tensile strength of 6 - 13 Mpa;
- an elongation of 650 - 1100 %.

This specific material achieves a high internal dampening, thus disrupting the mechanical vibration path between excitation bodies.

As an example of such a material, Hybrar® is mentioned, manufactured by Kuraray Co. LTD, Japan.

Preferably, the compound material has a damping behaviour with a loss factor < 0,2.

Further, in accordance with yet another embodiment of the constructional element in accordance with the present invention, the base material is a plastic. For such a plastic material a number of plastics known per se, or plastic materials yet to be designed, may be used. For an example, the base material may be polystyrene, high density polyethylene, polypropylene, or ABS resin.

The constructional element may be part of a larger construction. For example, the constructional element is a subpart of a moving part of a vehicle. Such a moving part of the vehicle may be a sliding panel of an open roof construction, whereas said subpart is a slide shoe attached thereto.

As mentioned in the main claim, the constructional element for its larger part is manufactured from the specific material in accordance with the present invention; for its smaller part also other materials may be applied. Thus, in case said constructional element is a slide shoe, according to yet another preferred embodiment said slide shoe has a steel core member. This steel core member, as is know per se, defines the connection between the functional part of the slide shoe (being the compound in accordance with the present invention) and the sliding panel or alike.

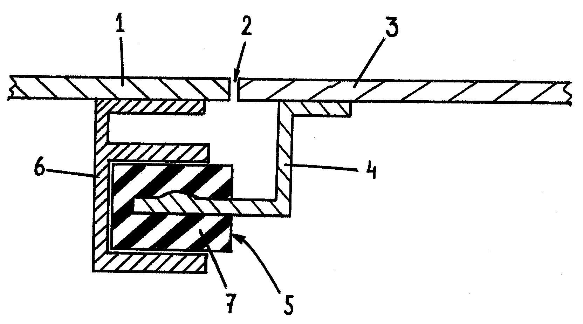

Hereinafter the invention will be elucidated referring to the single figure, which shows in a schematical manner a cross sectional view of part of an open roof construction provided with a constructional element in accordance with the present invention.

Referring to the drawing, part of an open roof construction of a vehicle is illustrated. In a stationary roof section 1 a roof opening 2 is defined which may be closed and opened by a moving panel 3, such as a sunroof. The constructional features of such an open roof construction are known per se, and therefore are not further elucidated here.

A support 4 (for example made of steel) is attached to the sunroof 3 and supports a slide shoe 5. The slide shoe is housed in, and cooperates with a guide 6 which is attached to the stationary roof part 1.

The slide shoe 5 is manufactured from a material 7 comprising a base material compounded with a high performance thermoplastic rubber, for example Hybrar®. The base material itself may be a plastic (however, also other materials, such as a rubber, are possible).

Vibrations occurring when the vehicle which is provided with the illustrated open roof construction, is driving are very effectively dampened by means of the slide shoe 7. Of course, the panel 3 normally will be provided with a number of slide shoes 5 cooperating with corresponding guides 6.

The slide shoe 5, which is an example of a constructional element which during its use will be subjected to variable mechanical loads, disrupts a mechanical vibration path between, in the present case, the moving panel 3 and stationary roof part 1.

The invention is not limited to the embodiment described before, which may be varied widely within the scope of the invention as defined by the appending claims.

## Claims

1. Constructional element which during its use will be subjected to variable mechanical loads, **characterized in that** the constructional element for its larger part is manufactured from a material comprising a base material compounded with a high performance thermoplastic rubber.

2. Constructional element according to claim 1, wherein the high performance thermoplastic rubber has the following properties, as measured according to ISO 37:
- a Shore A hardness of 40 - 90;
- a 100 % Modulus of 0.5 - 3 Mpa;
- a 300 % Modulus of 0.8 - 5 Mpa;
- a tensile strength of 6 - 13 Mpa;
- an elongation of 650 - 1100 %.

3. Constructional element according to claim 1 or 2, wherein the compound material has a damping behaviour with a loss factor < 0,2.

4. Constructional element according to claim 1, 2 or 3, wherein the base material is a plastic.

5. Constructional element according to claim 4, wherein the base material is one of the group comprising polystyrene, high density polyethylene, polypropylene, ABS resin.

6. Constructional element according to one of the previous claims, wherein the constructional element is a subpart of a moving part of a vehicle.

7. Constructional element according to claim 6, wherein said moving part of the vehicle is a sliding panel of an open roof construction and wherein said subpart is a slide shoe attached thereto.

8. Constructional element according to claim 7, wherein the slide shoe has a steel core member.
